# EUROPÄISCHE PATENTANMELDUNG

(11) **EP 1 126 385 A2**
(43) Veröffentlichungstag der Anmeldung: **22.08.2001**
(21) Anmeldenummer: 01103166.3
(22) Anmeldetag: 10.02.2001
(51) Int. Cl.: G06F 17/30

(54) **Verfahren zur Wiedergabe von gekapselten Informationen**

(30) Priorität: 11.02.2000 DE 10006229
(71) Anmelder: Firma Comma Soft AG, 53229 Bonn (DE)
(72) Erfinder: Huthmacher, Stefan Comma Soft AG, 53229 Bonn (DE)
(74) Vertreter: Baronetzky, Klaus, Dipl.-Ing.

(57) **Zusammenfassung**

Das erfindungsgemäße Verfahren gibt gekapselte Informationen wieder. Diese bestehen aus einzelnen Informationselementen und sind für die Übertragung von einem Server über einen Verbindungsweg, insbesondere ein Netzwerk von voneinander entfernten Stationen, zu einem Client bestimmt. Der Client weist eine Anzeigeeinheit auf, auf welcher die Informationen wiedergebbar sind. Die gekapselte Information wird einem Objekt zugeleitet, das einzelne Informationselemente erzeugt. Diese werden auf der Anzeigeeinheit mit sich in Anpassung an den Bildaufbau ändernden Anzeigeflächen wiedergegeben.

## Beschreibung

Die Erfindung betrifft ein Verfahren zur Wiedergabe von gekapselten Informationen, gemäß dem Oberbegriff von Anspruch 1.

Es sind Verfahren bekannt, die Informationsübermittlung dahingehend zu optimieren, daß gleichartige Informationen nicht mehrfach übermittelt werden, sondern daß beim zweiten Übermitteln der Information lediglich ein Verweis darauf übermittelt wird, daß die betreffende Information bereits vorliegt. Ein derartiges Verfahren ist insbesondere dann sinnvoll, wenn die Übertragungskapazität begrenzt ist, andererseits lokal aber im Verhältnis zur Bandbreite des Übertragungswegs genügend Kapazität zur Verfügung steht. Hier seien die informationsübertragende Einheit als Server und die informationempfangende Einheit als Client bezeichnet.

Die übermittelte Information wird häufig auf einer Anzeigeeinheit beim Client wiedergegeben. In vielen Fällen werden entsprechende Informationen von einem Server auf eine Vielzahl von Clients übertragen, die aber hinsichtlich ihrer Anzeigeeinheit und deren Ausstattung unterschiedlich sind. Für solche Fälle ist es vorgeschlagen worden, eine minimale Informationsmenge zu übermitteln, die von allen in Frage kommenden Clients dargestellt werden kann. Diese Lösung stellt allerdings nur einen Kompromiß dar, denn hierdurch wird es erforderlich, die darzustellende Information an den schlechtesten Fall anzupassen.

Ein weiteres Problem der Zusammenarbeit eines Servers mit unterschiedlichen Clients besteht auch in der unterschiedlichen Interpretation von Informationselementen, die der Server dem Client zur Verfügung stellt. Um zu verhindern, daß es zur Fehlinterpretation kommt, ist es bekannt, clientspezifische Informationen bereitzustellen, wobei der Server über einen Rückkanal des Verbindungswegs davon in Kenntnis gesetzt wird, welche Informationen der Client wie verarbeiten kann. Beispielsweise kann der Typ oder die Kennung des Clients dem Server übermittelt werden.

Auch hier besteht das Problem, daß der Server nicht nur entsprechend den ihm zur Verfügung gestellten Kennungen unterschiedlich reagieren muß, sondern daß er auch erst einmal ein und dieselbe Information in unterschiedlicher Form bereitstellen und bereithalten muß. Dies ist zeitaufwendig, erhöht den erforderlichen Speicherplatz, führt insbesondere aber auch leicht zu der Möglichkeit von Fehlinterpretationen, wenn etwa unterschiedliche Versionen von Clients zwar die gleiche Kennung übermitteln, spezifische Besonderheiten etwa von Unterversionsstufen aber nicht berücksichtigt werden.

Daher liegt der Erfindung die Aufgabe zugrunde, ein Verfahren zur Wiedergabe von gekapselten Informationen zu schaffen, das den Verwaltungsaufwand für die Informationsübertragung deutlich reduziert, wobei dennoch auch den Besonderheiten unterschiedlicher Clients Rechnung getragen werden kann.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, daß Anzeigeflächen auf der Anzeigeeinheit des Clients vorgesehen sind, die sich in Anpassung an den Bildaufbau ändern. Hierdurch wird es möglich, stets die erforderliche und insofern optimale Informationsmenge zu übermitteln, ohne daß die Informationen auf das beschränkt werden müßten, was auf allen Clients darstellbar wäre.

Das erfindungsgemäße Objekt dient zur optimierten Informationswiedergabe: Es erzeugt dynamisch einzelne Informationselemente, die besonders gut auf der Anzeigeeinheit wiedergegeben werden können. Die gekapselten Informationen lassen sich auf diese Weise optimiert wiedergeben, was vor allem für komplexe Strukturen gilt. Durch das Bereithalten von Objekten können auch verschiedene Seiten, die anzuzeigen sind, von dem gleichen Objekt bearbeitet werden, so daß die Dynamik der Anpassung der Darstellung sich nicht nur auf eine einzige Seite oder einen einzigen Rahmen, den Haupt-Rahmen, der den Bildaufbau von seiner Struktur her festlegt, bezieht. Es versteht sich, daß die Informationsübertragung zugleich auch durch die Umsetzung in dem Objekt in mehreren Unter-Rahmen der gleichen Seite optimiert werden kann, wobei die Verwendung des Objekts für mehrere Seiten aber eine erfindungsgemäß besonders vorteilhafte Eigenschaft darstellt.

Um den Informationsaustausch zwischen verschiedenen Unter-Rahmen einer Seite zu gewährleisten, war es bislang erforderlich, eine absolute Referenz auf den betreffenden Unter-Rahmen anzugeben. Wenn die Rahmenstruktur nun geändert oder an unterschiedliche Clients und deren Bedürfnisse angepaßt wurde, mußten jeweils die Referenzen sämtlicher Unter-Rahmen auch geändert werden. Erfindungsgemäß besonders günstig ist es, daß die Objekte rahmenunabhängig die Aufgabe der Informationsaufarbeitung übernehmen können. Die Festlegung eines relativen Bezugs von einzelnen Informationselementen zueinander ist erfindungsgemäß ausreichend.

Ein besonderes Problem in diesem Zusammenhang stellte die Tatsache dar, daß die in verschiedenen Rahmen wiederzugebenden Informationselemente nur dann für die Weiterverarbeitung zur Verfügung standen, wenn sie zum einen übermittelt und zum anderen noch angezeigt wurden. Bei der Übertragung einer Seite, die beispielsweise bei einer typischen Internet-Verbindung regelmäßig über mehrere Kanäle parallel verläuft, ist es nicht gewährleistet, daß zu einem bestimmten Zeitpunkt bestimmte Informationen, die von einem anderen Rahmen benötigt werden, innerhalb eines Rahmens bereits übermittelt worden sind. Dies führte regelmäßig zu Timing-Problemen, so daß sicherheitshalber Verzögerungsschlaufen eingebaut werden mußten, um zu gewährleisten, daß die aus anderen Rahmen stammenden Informationselemente auch bereits für die Weiterverarbeitung zur Verfügung stehen. Eine derartige Verzögerung ist jedoch unerwünscht, nachdem sie den Übertragungsweg verlangsamt und den Gesamtdurchsatz reduziert.

Erfindungsgemäß werden nun die zu übertragenden Informationen den Objekten zur Verfügung gestellt, so daß sie anzeigeunabhängig bereitgehalten werden können. Zudem ist ein relativer Bezug auf Unter-Rahmen möglich, und zwar nicht nur aus dem Haupt-Rahmen, sondern auch aus einem Unter-Rahmen eines anderen Zweigs heraus.

Erfindungsgemäß besonders günstig ist es, daß sich von Client zu Client und Anwendung zu Anwendung verändernde Informationselemente unmittelbar der Anzeigeeinheit zugeleitet werden können, während standardisierte Aufgaben in die Objekte verlagert und dort in der gewünschten Weise aufbereitet werden können. Damit ist eine strikte Trennung der speziellen und allgemeinen Funktionen und Aufgaben möglich.

Weitere Vorteile, Einzelheiten und Merkmale ergeben sich aus der nachfolgenden Beschreibung eines Ausführungsbeispiels anhand der Zeichnung.

Die einzige Figur der Zeichnung zeigt eine schematische Darstellung eines erfindungsgemäßen Verfahrens zur Wiedergabe von gekapselten Informationen.

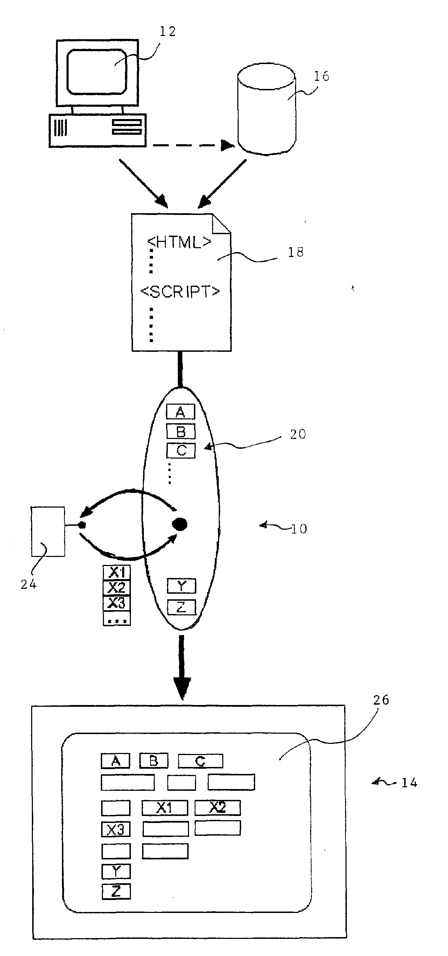

Gemäß der Darstellung in Fig. 1 sei ein Erfindungsweg 10 vorgegeben, der von einem Server 12 zu einem Client 14 verläuft.

Der Client 14 weist ggf. einen schnellen Zwischenspeicher 16 auf, und die vom Server 12 stammenden Informationen können wahlweise über den Zwischenspeicher 16 oder direkt dem Verbindungsweg 10 zugeleitet werden.

In dem dargestellten Ausführungsbeispiel bestehen die einzelnen Informationselemente aus einzelnen HTML- und/oder Javascript-Zeilen. Die Informationselemente 18 sind insofern in der Figur schematisch dargestellt.

Die Informationselemente 18 werden in an sich bekannter Weise sequenziell abgearbeitet und liegen in einem Strom 20 von Informationselementen vor. Teilweise werden die Informationselemente gekapselt übertragen. Die gekapselte Information 22 ruft ein Objekt 24 auf, das als Pagelet-Objekt bezeichnet wird (eingetragene Marke). Das Pagelet-Objekt interpretiert die ihm übergebenen Informationen in einer solchen Weise, daß sie dynamisch an die vorzunehmende Wiedergabe auf einer Anzeigeeinheit 26 des Clients angepaßt sind. Beispielhaft sind hier die Anzeigeflächen, die von dem Pagelet-Objekt erzeugt werden, mit X1, X2 und X3 bezeichnet. Diese Informationselemente werden in den Strom 20 der Informationselemente eingereiht und hierbei automatisch an der richtigen Stelle und in der richtigen Größe auf der Anzeigeeinheit 26 wiedergegeben.

Der Deutlichkeit halber sind auf der Anzeigeeinheit Anzeigeflächen A, B und C dargestellt, die als feste Anzeigeflächen vorgesehen sind. Demgegenüber sind die Anzeigeflächen X1, X2 und X3 von dem Pagelet-Objekt 24 vorgegeben, so daß sie an die erwünschte Darstellung je nach Aufbau der Anzeigeeinheit angepaßt sind. Demgegenüber sind die Anzeigeflächen Y und Z entsprechend den Anzeigeflächen A, B und C als feste Anzeigeflächen ausgestaltet.

Es versteht sich, daß hier lediglich die einfachste Form der erfindungsgemäßen Ausgestaltung eines Verfahrens zur Wiedergabe gekapselter Informationen erläutert ist. Wie vorstehend ausgeführt, entfaltet das erfindungsgemäße Verfahren besondere Wirkungen und Vorteile bei der Wiedergabe von Informationen in unterschiedlichen Rahmen auf der Anzeigeeinheit, wobei auch eine Verwendung über mehrere Seiten möglich ist.

## Patentansprüche

1. Verfahren zur Wiedergabe von gekapselten Informationen, die aus einzelnen Informationselementen bestehen und für die Übertragung von einem Server über einen Verbindungsweg, insbesondere ein Netzwerk von voneinander entfernten Stationen, zu einem Client bestimmt sind, wobei der Client eine Anzeigeeinheit aufweist, auf welcher die Informationen wiedergebbar sind, dadurch gekennzeichnet, daß die gekapselte Information einem Objekt zugeleitet wird, das einzelne Informationselemente erzeugt, die auf der Anzeigeeinheit mit sich in Anpassung an den Bildaufbau ändernden Anzeigeflächen wiedergegeben werden.

2. Verfahren nach Anspruch 1, dadurch gekennzeichnet, daß die angezeigten Informationen basierend auf einer Rahmenstruktur erzeugt werden, wobei in an sich bekannter Weise ein Haupt-Rahmen mehrere Unter-Rahmen aufweist, und daß die gekapselten Informationen im Haupt-Rahmen abgelegt sind.

3. Verfahren zur Wiedergabe von gekapselten Informationen, dadurch gekennzeichnet, daß in Abhängigkeit von den dem Objekt zugeleiteten Informationen die Größe und/oder die Position der Anzeigefläche durch das Objekt änderbar ist.

4. Verfahren nach Anspruch 3, dadurch gekennzeichnet, daß das Objekt die Größe und Position der Anzeigefläche an die Gesamtgröße der Anzeigeeinheit anpaßt.

5. Verfahren nach einem der vorhergehenden Ansprüche, dadurch gekennzeichnet, daß die Darstellungsgröße der Anzeigefläche auf der Anzeigeeinheit skalierbar, also vergrößerbar und verkleinerbar, ist, und der Skalierungsfaktor unabhängig von der Vorgabe durch das Objekt vom Benutzer des Client einstellbar ist.

6. Verfahren nach einem der vorhergehenden Ansprüche, dadurch gekennzeichnet, daß das Objekt clientseitig arbeitet.

7. Verfahren nach einem der Ansprüche 1 bis 5, dadurch gekennzeichnet, daß das Objekt serverseitig arbeitet.

8. Verfahren nach einem der Ansprüche 1 bis 5, dadurch gekennzeichnet, daß das Objekt eine relative Referenz auf Informationselemente anderer Unter-Rahmen, ggf. auch auf anderen auf der Anzeigeeinheit darzustellenden Seiten, wiedergibt.
